(19) Europäisches Patentamt
European Patent Office
Office européen des brevets

(11) **EP 0 802 826 B1**

(12) **EUROPÄISCHE PATENTSCHRIFT**

(45) Veröffentlichungstag und Bekanntmachung des Hinweises auf die Patenterteilung:
**06.12.2000 Patentblatt 2000/49**

(51) Int. Cl.$^7$: **B03C 5/02**

(21) Anmeldenummer: **95915125.9**

(22) Anmeldetag: **28.03.1995**

(86) Internationale Anmeldenummer:
**PCT/DE95/00453**

(87) Internationale Veröffentlichungsnummer:
**WO 95/26829 (12.10.1995 Gazette 1995/43)**

(54) **VERFAHREN UND VORRICHTUNG ZUM ABTRENNEN VON KOMPONENTEN AUS FLÜSSIGEN HOMOGENEN ODER HETEROGENEN SYSTEMEN**

PROCESS AND DEVICE FOR SEPARATING COMPONENTS FROM LIQUID HOMOGENOUS OR HETEROGENEOUS SYSTEMS

PROCEDE ET DISPOSITIF PERMETTANT DE SEPARER DES COMPOSANTS DE SYSTEMES HOMOGENES OU HETEROGENES LIQUIDES

(84) Benannte Vertragsstaaten:
**AT BE CH DK ES FR GB GR IE IT LI LU MC NL PT SE**

(30) Priorität: **31.03.1994 DE 4411823**

(43) Veröffentlichungstag der Anmeldung:
**29.10.1997 Patentblatt 1997/44**

(73) Patentinhaber:
**Andreyev, Vitalij Sergejewitsch, Dr.**
**193130 St. Petersburg (RU)**

(72) Erfinder:
**Andreyev, Vitalij Sergejewitsch, Dr.**
**193130 St. Petersburg (RU)**

(74) Vertreter:
**Kietzmann, Manfred et al**
**Kietzmann & Partner**
**Friedrichstrasse 95**
**10117 Berlin (DE)**

(56) Entgegenhaltungen:
**EP-A- 0 032 317      WO-A-85/05290**
**DE-A- 3 629 102**

• **DATABASE WPI Section Ch, Week 8307 Derwent Publications Ltd., London, GB; Class H06, AN 83-16957K & SU,A,919 710 ( LENGD ENG CONS INST) , 15.April 1982**

## Beschreibung

Die Erfindung betrifft ein Verfahren und eine Vorrichtung zum Abtrennen von Komponenten aus flüssigen homogenen und heterogenen Systemen. Das erfindungsgemäße Verfahren und die erfindungsgemäße Vorrichtung sind insbesondere geeignet zur Reinigung von Wasser von Mikroorganismen, Kohlenwasserstoffen und anderen fremdartigen Einschlüssen sowie zur Fraktionierung heterogener Lösungen oder Abtrennung einzelner Komponenten.

Für das Abtrennen von Komponenten aus derartigen Systemen ist die Anwendung von Filtern (SU 169 0813), von Flockungsmitteln (GB 223 0710) und Ionenaustauschern (EP 0 281 645) bekannt.

Der Nachteil dieser technischen Lösungen ist deren Selektivität, d.h. sie sind nur für bestimmte Beimengungen anwendbar und machen schließlich eine komplexe Aufarbeitung der flüssigen Phase erforderlich. Bei Verwendung von Flockungsmitteln und Ionenaustauschern werden bekanntlich chemische Stoffe in die flüssige Phase eingebracht, die deren Gebrauchseigenschaften verschlechtern können, was wiederum die Notwendigkeit ihrer zusätzlichen Reinigung und den Verbrauch von dazu erforderlichen Hilfsstoffen bedingt. Darüber hinaus ist zusätzlicher Aufwand zum Regenerieren der Reinigungs- oder Trennmittel zumeist die Folge.

Bekannt ist auch ein Verfahren zur magnetischen Behandlung von Wasser. Die flüssige Phase durchfließt hierbei mehrere Schichten mit magnetisierten Streifen wechselnder Polarität. Die Flüssigkeit bewegt sich dabei vertikal zu den Magnetfeldlinien (FR 265 3033). Diesem Verfahren haftet der Nachteil einer geringen Effektivität an. So ist es nur für einige Arten von Mikroorganismen wirksam.

Die EP 0 032 317 A1 offenbart ein Verfahren zur Filtration von Flüssigkeiten unter Verwendung elektrisch leitender Füllkörper.

Wegen der im Zwischenelektrodenraum fließenden großen Ströme ist das Verfahren jedoch mit einem hohen Energieaufwand verbunden. Die in der Beschreibung des EP 0 032 317 angeführten Beispiele lassen zudem einen niedrigen Reinigungseffekt erkennen. Im Falle des Einsatzes des Verfahrens zur Verringerung der Mikrobenkonzentration gelingt nur selten eine Reduzierung um den Faktor 1:1000. In der Regel liegt der Faktor wesentlich niedriger, beim Einsatz zur Trübungsreduzierung ist er sogar schlechter als 1:100.

Das Verfahren sieht die Anwendung von Füllkörpern mit einer großen Oberfläche vor, was einerseits direkt mit der Adsorptionskapazität des Stoffes korreliert, andererseits aber die Regeneration des Füllkörpers erschwert und folglich verlangsamt. Es ist ein erhöhter Aufwand an Regenerierflüssigkeit erforderlich (Beispiel 6, Abb. 7). Das führt schließlich auch dazu, daß der elektrisch leitende Adsorbent wegen Giftanhäufung auf seiner Oberfläche die Adsorptionsfähigkeit verliert und wegen des dadurch begründeten Produktivitätsverlustes durch einen neuen ersetzt werden muß.

Ein weiterer allgemein bekannter und wesentlicher Mangel des genannten Verfahrens besteht darin, daß die verwendeten elektrisch leitenden Füllkörper durch die Anodenpolarisation teilweise in Lösung übergehen. Das wirkt sich zwangsläufig nachteilig auf die Möglichkeit der Regeneration und auch auf den Grad der Flüssigkeitsreinigung aus.

Die Anwendung elektrisch leitender Füllkörper mit großer Oberfläche unter der Einwirkung eines elektrischen Feldes hat sich daher als wenig effektiv erwiesen und auch dazu geführt, daß sich das in der EP 0 032 317 offenbarte Verfahren in der Praxis nicht durchgesetzt hat.

In der DE 36 29 102 A1 wird eine Flüssigkeitsfiltereinrichtung beschrieben, die unter Verwendung eines Adsorbens unter Anlegen einer Gleich-, Wechsel- oder überlagerten Gleich- und Wechselspannung arbeiten soll.

Diese technische Lösung weist drei wesentliche Nachteile auf.

Der erste allen Adsorptionsverfahren eigene Mangel besteht darin, daß die Ausnutzung von Adsorbentien für die Reinigung flüssiger Medien unvermeidlich von extremen Schwierigkeiten bei ihrer Regeneration begleitet wird. Diese Schwierigkeiten ergeben sich aus der "Vergiftung" der Adsorbentien im Arbeitsprozeß und dem dadurch notwendigen periodischen Ersatz. Die "Vergiftung" der Adsorbentien vollzieht sich sowohl als Folge der chemischen Sorption, als auch durch die während des Betriebes erfolgende Annäherung der Komponenten, wodurch die verhältnismäßig schwachen elektrostatischen Wechselwirkungen im System Adsorbent - Adsorbat in den Hintergrund treten und stattdessen stärkere van-der-Vaals-Bindungen und Dispersionswechselwirkungen eingegangen werden.

Der zweite Mangel ist damit verbunden, daß kein realer Adsorbent auf seiner Oberfläche mehrschichtige Massen der Mikroteilchen - darunter Mikroorganismen - effektiv festhalten kann. Dies ist selbst bei den Geschwindigkeiten der Flüssigkeitsströme der Fall, die von minimalem praktischen Interesse sind.

Der dritte Mangel ist damit verbunden, daß es, wie in der Beschreibung hervorgehoben, für die Funktion der offenbarten Flüssigkeitsfiltereinrichtung nötig ist, einen Teil des Zwischenelektrodenraumes von den Sorbentien frei zu halten. In diesem Teil soll unter Einwirkung eines äußeren elektrischen Feldes eine Lockerung der Wechselwirkung zwischen den Molekülen des Lösungsmittels und den Molekülen der die Lösung verunreinigenden Komponenten entstehen.

Der beschriebene Vorgang einer effektiven Einwirkung der verhältnismäßig schwachen elektrischen Felder auf relativ starke intermolekulare Wechselwirkungen ruft vom Standpunkt der physikalischen Chemie große Zweifel hervor. Doch selbst wenn man der dargelegten technischen Lösung noch folgen würde, so müßte man erkennen, daß im Fall einer elektrisch leitenden Lösung der größte Teil des elektrischen Potentials in der Adsorbensschicht und nicht im freien Gebiet des Zwischenelektrodenraumes abfällt. Demzufolge kann die vorgeschlagene technische Lösung nicht einmal theoretisch in der breiten Klasse praktischer Fälle angewandt werden, bei denen die Lösung Salze oder andere Elektrolyte enthält.

Da in der Beschreibung des DE 36 29 102 A1 auch kein Beispiel einer praktischen Anwendung der vorgeschlagenen Einrichtung ausgeführt wird, ist deren gewerbliche Anwendbarkeit und ihr praktischer Nutzen hochgradig in Frage zu stellen.

Die ausführlich aufgezeigten Mängel des Standes der Technik lassen die Frage nach effektiveren Reinigungstechnologien weiterhin aktuell bleiben.

Die Aufgabe der Erfindung besteht deshalb darin, ein einfacheres, effektiveres und universell anwendbares Verfahren zum Abtrennen von Komponenten aus flüssigen homogenen oder heterogenen Systemen, insbesondere aus verunreinigtem Wasser, bereitzustellen. Unter Komponenten sind insbesondere Spezies, die molekular, ionogen oder kolloid gelöst sind und Mikroorganismen zu verstehen.

Aufgabe der Erfindung ist es weiterhin, eine Vorrichtung zur Durchführung des erfindungsgemäßen Verfahrens zu schaffen, die eine effektivere Regenerierung und höhere Betriebsdauer ermöglicht.

Erfindungsgemäß wird erstere Aufgabe durch ein Verfahren mit den kennzeichnenden Merkmalen nach Anspruch 1 gelöst. Weitere vorteilhafte Ausgestaltungen des Verfahrens ergeben sich aus den Ansprüchen 2 bis 7.

Erfindungsgemäße Vorrichtungen zur Durchführung des Verfahrens sind durch die Merkmale der Ansprüche 8 bzw. 12 gekennzeichnet. Vorteilhafte Weiterbildungen der Vorrichtungen ergeben sich aus den weiteren Ansprüchen.

Das erfindungsgemäße Verfahren und die vorgeschlagenen Vorrichtungen zeichnen sich gegenüber den bekannten Methoden und Vorrichtungen zur Reinigung von flüssigen Systemen und der Abtrennung verschiedenartiger Komponenten aus flüssigen Systemen insbesondere durch ihre Einfachheit aus. Polarisierbare, ohne elektrisches Feld nichtadsorbierende und nicht elektrisch leitende Stoffe garantieren in Kombination mit einem elektrischen Feld, dessen Feldstärke in einer Anfangsphase den normalen Betriebswert um ein Mehrfaches übersteigt, einen hohen Reinigungseffekt und eine universelle Anwendbarkeit und ermöglichen darüber hinaus eine schnelle Regenerierung der technischen Ausrüstungen. So eignen sich das erfindungsgemäße Verfahren und die Vorrichtungen zum Abtrennen so verschiedenartiger Komponenten, wie schwebende Teilchen, Mikroorganismen und Kohlenwasserstoffen, aus flüssigen homogenen oder heterogenen Systemen.

Die optimalen Bedingungen für das Abtrennen einzelner Komponenten werden dabei durch folgende Überlegungen bestimmt.

Als polarisierbare Füllkörper, die ohne elektrisches Feld nichtadsorbierend sind, haben sich bestens geeignet ferroelektrische Keramik, die mit einer Polymerschicht umhüllt oder in eine Polymermatrix, vorzugsweise gemischt mit Silikaten, eingebettet oder als Pulver in kugeligen Körnern aus vernetztem Polyvinilalkohol in einem Masseverhältnis bis 1:12 eingeschlossen sind, oder disperses Material, vorzugsweise Sand, zerkleinerter Quarz und/oder eine Dispersion von Chitosan, Zellulose und Verbundstoff, wobei die Füllkörper einen Korndurchmesser im Bereich von 0,1 mm bis 3,00 mm aufweisen.

Für die Entfernung der Komponenten aus dem Behälter sind eine Depolarisierung oder Polarisierung der Teilchen gegebenenfalls mittels eines elektrischen Feldes mit entgegengesetztem Vorzeichen oder eines Wechselfeldes bei Durchpumpen reinen Wassers oder einer erforderlichenfalls erhitzten Salzlösung, am besten in umgekehrter Richtung zur Durchströmrichtung des flüssigen Systems, ausreichend. Dafür können auch an sich bekannte Detergentien, Säuren, Laugen oder organische Lösungsmittel verwendet werden.

Die Verwendung geringerer Feldstärken und höherer Durchsätze wirken sich zwar nachteilig auf die Effektivität der Reinigung des Wassers oder des Abtrennens von Komponenten aus der Flüssigkeit aus, jedoch ist eine Erniedrigung der Feldstärke im Reinigungsprozeß mit dem Ziel der Einsparung von Elektroenergie durchaus möglich. Die Auswahl der maximalen Feldstärke und der minimalen Durchflußgeschwindigkeiten wird durch die Eigenschaften der betreffenden Flüssigkeit, beispielsweise des zu reinigenden Mediums und durch ökonomische Kriterien bestimmt. Daraus ergibt sich auch der Flüssigkeitsdurchsatz.

Im folgenden soll das erfindungsgemäße Verfahren anhand einiger Beispiele näher erläutert werden:

Beispiel 1

Bei Verwendung von Füllkörpern aus ferroelektrischer Keramik mit einem Molekulargewicht M = 10.000 g/Mol, eingeschlossen in eine 1000 Å starke Schicht aus Polyvinylpirrolidon, wurde die Variante eines havariemäßigen Ausstoßes von E-Coli M-17 mit einer Konzentration $2,2 \cdot 10^{9}$ KbE (Koloniebildende Einheiten) / ml in ein natürliches Wasserbecken für Abwasser imitiert.

Nach der Reinigung bei E = 150 V/cm bei einem spezifischen Volumendurchsatz von 1 $h^{-1}$ wurden in den Proben keine E-Coli mehr gefunden, was unter diesen Bedingungen von der vollständigen Reinigung des Wassers von Mikroorganismen zeugt.

## Beispiel 2

Es wurde die Eignung des erfindungsgemäßen Trennprozesses von Zellen und molekularen Komponenten für die automatisierte biochemische Analyse untersucht, die bekanntlich eine hohe Reproduzierbarkeit dieses Prozesses voraussetzt.

Es wurden Modellsuspensionen getrennt, die aus E-Coli M-17 ($10^9$ Kbe/ml) und Eiweiß ($E_1$-Albumin) bestehen (5 mg/ml). Trennbedingungen: Füllkörper - kugelförmige Teilchen (Durchmesser 0,5 mm) aus Polyvinylalkohol mit eingeschlossener ferroelektrischer Keramik im Masse-Verhältnis 1 : 8; Feldstärke 50 V/cm; Kolonnenlänge 270 mm; Durchflußgeschwindigkeit 0,15 cm/sec; Probenvolumen 0,5 ml; Lösungsmittel - destilliertes Wasser, 0,1-molarer Phosphatpuffer auf dem Hintergrund von 0,5-molarer Null-Lösung (pH = 8,5); Ausbeute an Zellen: ca. 93 %.

## Beispiel 3

Trennbedingungen analog zu Beispiel 2 mit der Ausnahme, daß als Füllkörper Körner (mittlerer Durchmesser 0,25 mm) aus nichtmodifizierter ferroelektrischer Keramik verwendet wurden; Polyvinylalkohol : ferroelektrischer Keramik im Masse-Verhältnis 1 : 12; Zellausbeute: 50 %.

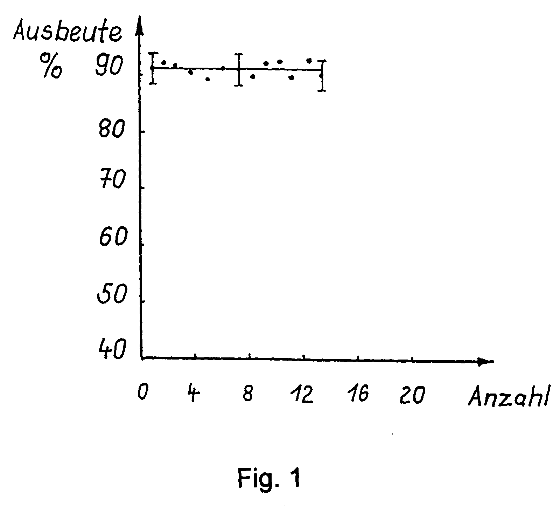

In **Fig. 1** ist die Ausbeute von E-Coli M-17 grafisch dargestellt bei Trennung in einer Säule mit Polyvinylalkoholkörner mit eingeschlossenem Pulver aus ferroelektrischer Keramik.

## Beispiel 4

Es wurde die Trennung des Grippe-Virus A/Texas (1024 G E/0,2 ml) und Ballast-Eiweiß in virenenthaltender Flüssigkeit von Hühnerembryos vorgenommen. Die Trennbedingungen sind analog denen des Beispiels 2, die Virusausbeute betrug 83 %, der Reinigungsgrad bezüglich des Eiweißes betrug mehr als das 40fache (0,05 mg/ml Eiweiß in der Virusfraktion anstele 2,1 mg/ml in der Ausgangssubstanz), die Eiweißausbeute in der Ballastfraktion betrug 93 %.

## Beispiel 5

Es wurde die Trennung von Bestandteilen des Blutes und Eiweiß des Plasmas aus Zitratblut vorgenommen mit der Ausnahme, daß der pH-Wert des zweiten Eluenten 7,5 betrug. Die Trennbedingungen sind analog zu Beispiel 2. Die Eiweißausbeute betrug 96 %, die Ausbeute an Zellmasse 78 %, die Reinigung des Eiweißes von Zellen das 68fache.

## Beispiel 6

Es wurde die Trennung der Fermentlösung von Endonuklease aus Smarcesenes in zwei Fraktionen vorgenommen: eine Eiweißfraktion und eine niedermolekulare Fraktion, die Zucker, Aminosäuren und Salze enthält. Trennbedingungen: Füllkörper - kugelförmige Körner mit einem Durchmesser von 0,1mm, Polyvinylalkohol und ferroelektrische Keramik im Masse-Verhältnis 1 : 8, Feldstärke des elektrischen Feldes 150 V/cm, Säulenlänge 450 mm, Strömungsgeschwindigkeit 0,15 cm/sec, Probenvolumen 1,0 ml, Eluent - destilliertes Wasser, 0,1-molarer Phosphat-Puffer mit pH = 7,4.

Die Ausbeute an Endonuklease lag bei 85 %, die Reinigungsleistung bezüglich der niedermolekularen Verbindungen betrug das 530fache.

## Beispiel 7

Es wurde die Trennung einer Suspension von Zellen E-Coli M-17 ($10^{10}$ Kbe/ml) und Eiweiß (5 mg/ml) vorgenommen. Die Trennbedingungen sind wie im Beispiel 2, mit der Ausnahme, daß die elektrische Feldstärke 5 V/cm beträgt. Die Zellausbeute liegt bei 98 %. Während jedoch im Beispiel 5 der Eiweißgehalt in der Zellfraktion 0,06 mg/ml betrug (Reinigungseffekt nahezu das 100fache), so hat sich im vorliegenden Fall die Eiweißbeimengung auf 0,15 mg/ml erhöht (d.h. der Reinigungseffekt hat sich um das 3fache erniedrigt und beträgt nur noch das 30fache), die Beimengung von Zellen in der Eiweißfraktion für das Beispiel 1 betrug 3 %, im vorliegenden Beispiel 12 %. Die Eiweißausbeute liegt bei 100 %.

## Beispiel 8

Trenngegenstand und Trennbedingungen entsprachen Beispiel 7. Die Feldstärke betrug 250 V/cm. Zellausbeute ist 90 %, Reinigungseffekt der Zellen vom Eiweiß das 80-fache. Die Beimengung von Zellen in der Eiweißfraktion liegt bei 1,1 %. Die Eiweißausbeute beträgt 95 %.

## Beispiel 9

Gegenstand und Bedingungen des Trennprozesses wie im Beispiel 7. Feldstärke war 500 V/cm; Zellausbeute 53 %, Reinigungseffekt der Zellen vom Eiweiß das 40-fache. Beimengung von Zellen in der Eiweißfraktion weniger als 1 %. Eiweißausbeute 75 %.

## Beispiel 10

Es erfolgte die Trennung einer Suspension aus lebenden und toten Zellen von E-Coli M-17 (50 % und 50 %) und von Eiweiß (5 mg/ml), d.h. von drei Komponenten, die in der Säule zurückgehalten werden. Die Trennbedingungen waren wie im Beispiel 8. Die Suspension wurde in drei Fraktionen getrennt. Die Ausbeute an lebenden Zellen betrug 89 %, die Ausbeute an toten Zellen 95 % und die Eiweißausbeute 95 %. Die Beimengung von toten Zellen in der Franktion der lebenden Zellen lag bei 4 %. Die Beimengung der Zellen in der Eiweißfraktion betrug ca. 2 %.

Die Reproduzierbarkeit des Prozesses wurde wie folgt berechnet:

$$k_a = \frac{\overline{a}}{S_a}, \quad k_b = \frac{\overline{b}}{S_b}$$

wobei gilt

| | |
|---|---|
| $\overline{a}, \overline{b}$ | - Mittelwert aus den Messungen in % |
| $\Delta a, \Delta b$ | - Fehler der Einzelmessungen in % |
| $\Delta S_a, \Delta S_b$ | - mittlerer quadratischer Fehler der einzelnen Messungen in % |
| $k_a, k_b$ | - Koeffizienten, die die Reproduzierbarkeit des Prozesses charakterisieren |

Berechnung der Reproduzierbarkeit des Prozesses nach Fig. 1

$$\overline{a} = 92\ \%, \Delta S_a = 1{,}44\ \%, k_a = 64$$

Die Anwendung der Erfindung in der Variante der Beispiele 3 bis 10 gestattet es, den Trenngrad flüssiger Biopräparate, die Zellen und biologische Makromoleküle enthalten, um 50 % zu erhöhen und ihre Verluste durch Erniedrigung der Eigensorption um 5 bis 10 % zu senken sowie die Reproduzierbarkeit des Fraktionsprozesses (des elektrochromatografischen Prozesses) um das 1,5fache zu erhöhen.

Mit dem Ziel der Einbeziehung von ionisierten Komponenten als stark polarisierbare Füllkörper in die Reinigungsprozesse oder die Fraktionierung können Körner von Ionenaustauschermaterial oder von funktional hochaktiven Sorbenten benutzt werden, deren Dipolmoment durch die polarisierte elektrische Doppelschicht erzeugt wird.

Die Überlagerung eines äußeren elektrischen Feldes verschiebt das Sorptionsgleichgewicht in Richtung erhöhter Konzentration der adsorbierten Phase, d.h. vergrößert die Sorptionskapazität der Füllkörper in bezug zu den ionisierten Komponenten.

Das wiederum erhöht die Dichte der elektrischen Doppelschicht und folglich die Polarisierbarkeit der Körner. Auf diese Weise vergrößert sich die Kapazität der Elektrosorption bezüglich der Heterokomponenten (Mikroben und andere fremdartige Einschlüsse).

Die Wegnahme des Feldes führt zum Verlust der Sorptionskapazität von derartigen Füllkörpern und kann, wie auch in oben betrachteten Fällen, für die Regenerierung der Füllkörper genutzt werden.

Die Effektivität der vorliegenden Modifikation des Verfahrens wird durch die folgenden Beispiele illustriert.

Beispiel 11

Durch eine Säule, gefüllt mit Granulat des Kationenaustauschers K 4-8 in H+-Form wurde eine Lösung gefördert, die 100 µg/ml $CaCl_2$ und $10^9$ Kbe/ml Bakterien E-Coli K-12 enthielt.

Bei Anlegen des äußeren Feldes mit E = 5 V/cm am Ausgang der Säule erfolgte die Senkung der Ionenkonzentration $Ca^{2+}$ um das 15fache und das vollständige Zurückhalten der Zellen E-Coli K-12.

Beispiel 12

Durch eine Säule mit Füllkörperkörnern des Sorbenten "sephardes G-15" ("Pharmacia", Schweden) wurde eine Suspension aus Hefezellen Sach. cerevisiae mit der Konzentration $3 \times 10^8$ Kbe/ml gefördert, die 30 µg/ml $FeCl_3$ enthält. Beim Anlegen eines elektrischen Feldes mit der Feldstärke E = 40 V/cm ist die Ionenkonzentration des Eisens im Filtrat bis auf ein Niveau 1 - 2 µg/ml gefallen. Die Konzentration der Hefeteilchen ist dabei ungefähr um den Faktor $10^6$ gefallen.

Die angegebene minimale elektrische Feldstärke von 1 V/cm gewährleistet eine effektive Reinigung der Flüssigkeit von fremdartigen Komponenten, z.B. Wasser von verunreinigender biologischer Substanz bei einer Strömungsgeschwindigkeit des flüssigen Mediums von 0,5 m/h bis 1,5 m/h. Bei höheren Strömungsgeschwindigkeiten oder besonders hohen Reinheitsanforderungen muß die elektrische Feldstärke erhöht werden.

Als besonders vorteilhaft und damit erfindungswesentlich hat es sich erwiesen, zu Beginn des Trennprozesses, insbesondere in den ersten 10 Minuten, eine elektrische Feldstärke anzulegen, die den normalen Betriebswert um ein Mehrfaches übersteigt. Dadurch wird bewirkt, daß zu Beginn des Arbeitsprozesses auf den Teilchen der Schüttschicht die Bildung stark polarisierter Strukturen beschleunigt wird, die in der Folgezeit deren intensives Wachstum auch bei geringeren Feldstärken fördern.

Die Prozesse, die in den Beispielen 1 bis 10 beschrieben sind, wurden mit einem Behälter mit drei Kammern realisiert.

Die Beispiele 11 und 12 wurden in Zellen mit Plattenelektroden realisiert.

Der konstruktive Aufbau der erfindungsgemäßen Vorrichtungen soll im folgenden näher erläutert werden. Es zeigen:

**Fig. 2** den Längsschnitt einer erfindungsgemäßen Vorrichtung mit zwei Elektrodenkammern und einer dazwischen angeordneten Arbeitskammer

**Fig. 3** die schematische Darstellung einer säulenartigen erfindungsgemäßen Vorrichtung zum Trennen flüssiger Medien.

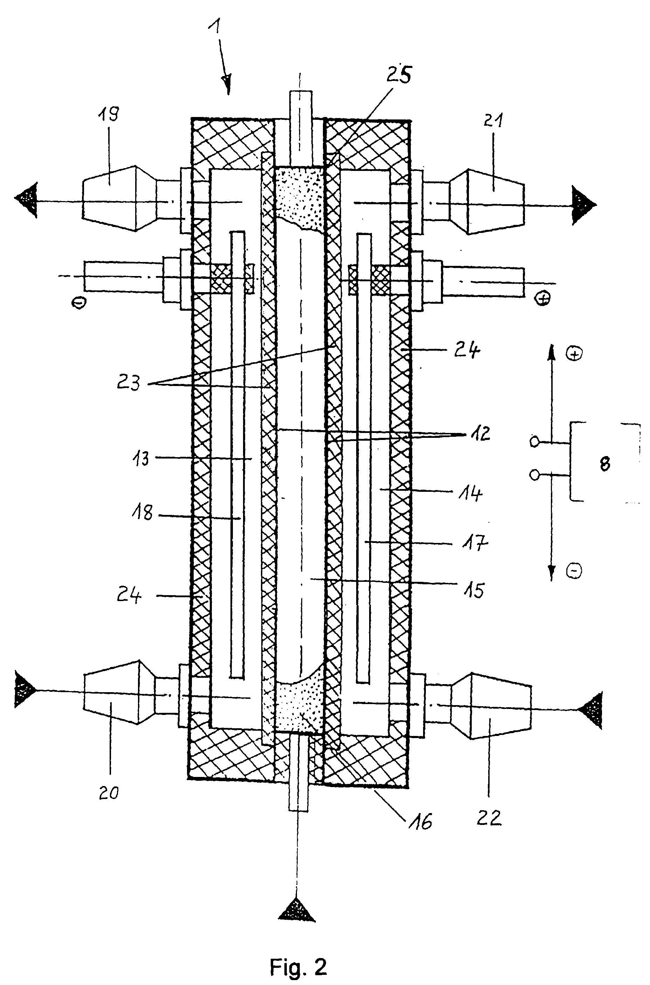

Bei der in **Fig. 2** dargestellten Variante der Vorrichtung ist der Behälter 1 quaderförmig ausgebildet und ist ein 3-Kammersystem vorgesehen, bestehend aus den Elektrodenkammern 13 und 14 sowie der Arbeitskammer 15, in der Füllkörper 16 angeordnet sind. In diesem Fall müssen die

Elektrodenkammern 13 und 14 mit Elektrolytlösungen beschickt werden, die zweckentsprechend Puffereigenschaften haben sollten.

Die Elektrodenkammern 13 und 14 sind mittels der semipermeablen Wände 12, die aus an sich bekannten Materialien bestehen, von der Arbeitekammer 15 getrennt. Die semipermeablen Wände 12 verhindern das Eindringen von großen Molekülen und Kolloidteilchen in die Elektrodenkammern 13 und 14. Sie verhindern zugleich , daß sich die in diesen Kammern vollziehenden elektrolytischen Prozesse auf das durchströmende flüssige System und dessen Behandlung hinderlich auswirken. Elektrolyseprodukte aus den Elektrodenkammern 13 und 14 könnnen nicht in die Arbeitskammer 15 gelangen. Zugleich werden die Bildung eines quer gerichteten elektrischen Stromes im Innenraum der Arbeitskammer 15 und die Polarisierung der Füllkörper 16 gewährleistet.

Außerdem ermöglichen die semipermeablen Wände 12 durch Diffusionshemmung die Möglichkeit der getrennten Entnahme von "Anoden"- und "Katoden"-Wasser, das eine Reihe spezifisch nützlicher Eigenschaften hat (biologisch aktiv, bakterizid u.a.).

In einer Reihe von Fällen erweist es sich als vorteilhaft, die Spannung der elektrischen Versorgungsquelle herabzusetzen (z.B. mit dem Ziel besserer Bedingungen für den Arbeitsschutz beim Betrieb der Vorrichtung) oder die Kontaktfläche der Lösung mit der Elektrodenoberfläche zu vergrößern (z.B. für die zusätzliche Realisierung von Reaktionen bestimmter Komponenten an den Elektroden zwecks deren Überführung in den gasförmigen Zustand (Chlorionen in gasförmiges Chlor, Nitrate in gasförmige Oxide usw.) oder in einen wenig aktiven Zustand, in dem sie weniger toxisch sind (z. B. toxische Ionen von Schwermetallen in neutrale Atome). In diesen Fällen kann die Vorrichtung mit mehr als zwei Elektroden ausgeführt werden. Die Elektroden können platten- oder stabförmig ausgebildet sein und einen massiven, gitterförmigen, netzförmigen oder perforierten Aufbau aufweisen.

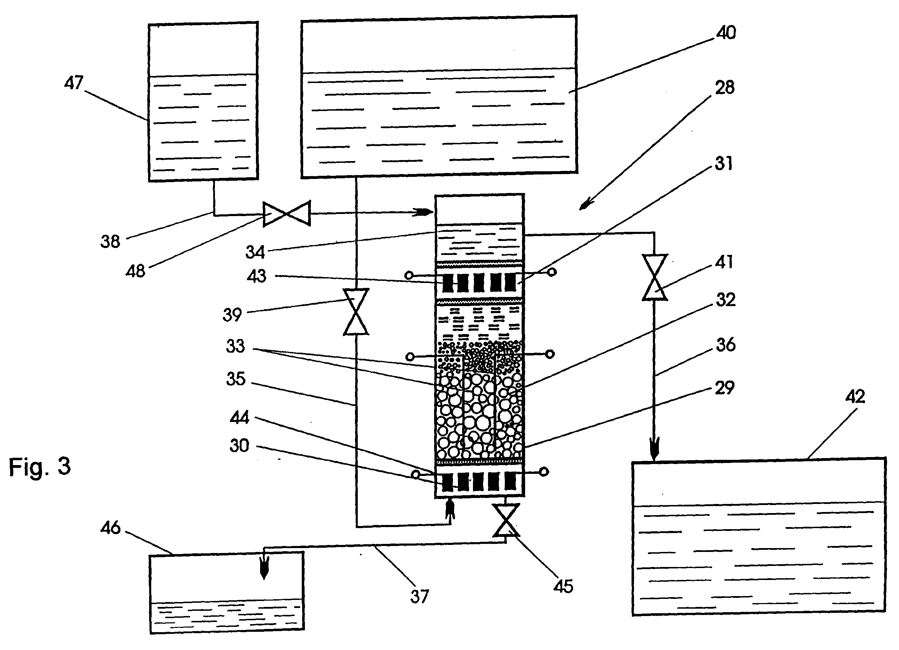

Die in **Fig. 3** als Elektroadsorptionssäule 28 dargestellte erfindungsgemäße Vorrichtung besteht aus dem Behälter 29, in dem die Elektroden 33 sowie zusätzlich eine Elektrodenzelle 30 (elektrochemische Eingangszelle) und eine Elektrodenzelle 31 (elektrochemische Ausgangszelle) sowie die polarisierbaren Füllkörper 32 angeordnet sind. Letztere können aus einem oder verschiedenen Materialien mit unterschiedlicher Größe der Teilchen, die auch eine faserartige Struktur aufweisen können, bestehen. Außerdem kann die Schichtdicke der jeweiligen Füllkörper 32 insbesondere in Abhängigkeit von der Art des Füllkörpermaterials, seiner Struktur und der Art der Verunreinigungen sowie des angestrebten Reinigungseffektes und der Produktivität der Vorrichtung unterschiedlich dimensioniert sein. Oberhalb der Elektroden 33 können zusätzliche Schichten von Füllkörpern angeordnet sein, wenn spezielle Reinigungsaufgaben beispielsweise in bezug auf weitere zu entfernende Komponenten vorgesehen sind. Wesentlich ist, daß die Füllkörper 32 nicht mehr als 95 % des Innenraumes des Behälters 29 ausfüllen. Der restliche nicht ausgefüllte obere Teil 34 des Innenraumes des Behälters 29 dient als spezielles Reservoir für das Regenerieren der polarisierbaren Füllkörper 32 wenn entgegengesetzt zur Durchströmrichtung des zu reinigenden Mediums gespült werden muß.

An den säulenförmigen Behälter 29 sind die Rohrleitungen 35, 36, 37, 38 angeschlossen. Mittels der Rohrleitung 35 und dem Ventil 39 ist der Behälter 29 mit der Vorlage 40, in der sich das zu reinigende Medium befindet, verbunden. Die Rohrleitung 36 mit dem Ventil 41 ist oberhalb des polarisierbaren Füllkörpermaterials 32 am Behälter 29 angeordnet und stellt die Verbindung zum Behälter 42 her, der die gereinigte Flüssigkeit aufnimmt. Die Rohrleitung 37 mit dem Ventil 45 verbindet den Behälter 29 mit dem Behälter 46.

Die Polarisierung der Füllkörper 32 erfolgt wie bereits beschrieben.

An den oberen Teil des Behälters 29 ist über die Rohrleitung 38 und das Ventil 48 eine zusätzliche Vorlage 47 mit Regenerierlösung angeschlossen. In Abhängigkeit von den Eigenschaften der zu reinigenden Flüssigkeiten und dem Charakter der Verunreinigungen kommen Lösungen von Tensiden, organischen Lösungsmitteln, Laugen, Säuren usw. für spezielle Regenerieranforderungen zum Einsatz.

Mittels der Elektrodenzellen 30 und 31 können Flüssigkeiten von Komponenten und Stoffen gereinigt werden, die sich durch Lösung ionisieren lassen. Auf dem Wege der Elektrooxidation (z.B. Phenol) oder durch Elektroreduktion (z.B. Nitrit, Formaldehyd) ist es möglich, sie aus dem zu reinigenden Medium zu entfernen.

Die Elektrodenzellen 30 und 31 sind mit Anoden ausgestattet, die sich flächenmäßig deutlich von den Katoden unterscheiden. Sie sind daher für die pH-Wert-Korrektur wässriger Systeme besonders vorteilhaft. Mittels der Elektrodenzelle 30 am Zulauf des Behälters 29 ist es möglich, durch Anodenlösung auch Ionen zu erzeugen, (z.B. Eisen- und Aluminiumionen), die dann als Koagulanten wirksam werden. Das verbessert nicht nur die nachfolgende Reinigung, sondern spart auch Elektroenergie. Es kann dabei vorteilhaft sein, die Zellen mit Gasfallen auszustatten und die Elektrodenzelle 30 außerhalb des Behälters 29 anzuordnen.

Eine herausragende Besonderheit der Vorrichtung gemäß **Fig. 3** besteht darin, daß neben dem Behälter 32 mit den Elektroden 29, den im elektrischen Feld polarisierbaren Füllkörpern 32 und dem Vorhandensein eines nicht mit Füllköpern gefüllten Hohlraumes 34 für die Spülung des polarisierbaren Materials, die Durchlaßfähigkeit der Rohrleitung 37 die Durchlaßfähigkeit des Zulaufes 35 mindestens um das 1,5fache übertrifft.

Die Vorrichtung arbeitet folgendermaßen:

In den Behälter 29 werden die polarisierbaren Füllkörper 32 eingebracht, an die Elektroden 33, 43, 44 wird Spannung angelegt, wonach die zu reinigende Flüssigkeit durch Öffnung des Ventils 39 und die Rohrleitung 35 in den unteren Teil des Behälters 29 eintritt. Nachdem sie die Elektrodenzelle 30, die oder den polarisierbaren Füllkörper 32 sowie die Elektrodenzelle 31 durchflossen und vollständig oder teilweise den oberen Teil 34 des Behälters 29 gefüllt hat, fließt sie durch die Rohrleitung 36 als gereinigtes Medium in den Behälter 42 ab. Die im Flüssigkeitssystem enthaltenen Beimengungen werden bei der Bewegung durch die polarisierbaren Füllkörper 32 unter dem Einfluß des elektrischen Feldes koagulieren und durch die polarisierten Füllkörper 32 adsorbiert.

Zur Regenerierung der Füllkörper 32 wird in der Regel die Elektroversorgung abgeschaltet oder werden die Elektroden 33, 43, 44 umgeschaltet und das Ventil 45 der Rohrleitung 37 geöffnet. Dabei hört dank der Differenz in der Durchlaßfähigkeit der Rohrleitungen 35 und 37 die Flüssigkeit auf, durch die Rohrleitung 36 zu strömen. Sie fließt durch die Rohrleitung 37 und das Ventil 45 in den Behälter 46.

Die polarisierbaren Füllkörper 32 werden anschließend von adsorbierten Verunreinigungen gereinigt. Dies geschieht durch Auswaschen der Schmutzteilchen von der Oberfläche der Füllkörper 32. Durch Umpolen der Elektroden 33 ändert sich die Polarität der Füllkörper 32 oder sie wird durch Abschalten des elektrischen Stromes aufgehoben mit der Folge, daß die adsorbierten Verunreinigungen von der Oberfläche der Füllkörper 32 abgestoßen werden. Beim Durchspülen der polarisierbaren Füllkörper mit Regenerierlösung aus dem Behälter 47 oder einfach durch den Rückfluß der im Behälter 29 befindlichen gereinigten Flüssigkeit werden die zurückgehaltenen Beimengungen ausgewaschen und gelangen in den Behälter 46. Die Regenerierlösung im Behälter 47 kann zum Zweck eines höheren Reinigungseffektes Detergentien oder andere Reinigungsmittel enthalten, auf der Grundlage verschiedener Lösungsmittel beruhen oder eine erhöhte Temperatur besitzen.

Wenn es erforderlich ist, die Verluste an gereinigter Flüssigkeit beim Spülen zu senken, wird beim Spülen vor dem Öffnen des Ventils 45 das Ventil 39 geschlossen.

Der weitere Betrieb der Vorrichtung (der folgende Zyklus der Trennung oder Reinigung) erfolgt durch Schließen des Ventils 45 und bei Notwendigkeit durch Öffnen des Ventils 39, falls es geschlossen war.

Das angegebene Arbeitsschema und die Regenerierung der polarisierbaren Füllkörper 32 ermöglichen insbesondere die Reinigung von Wasser mindestens im Verlaufe von zwei Jahren ohne Auswechseln der Füllkörper.

Bei der industriellen Erprobung einer Anlage zeigte sich, daß bei kleinen Abmessungen die Reinigung einer Flüssigkeit mit einer Produktivität von 2 bis 200 l/h möglich ist, bei vollständiger Entfernung von mechanischen Beimengungen sowie beliebiger organischer Teilchen, darunter von Mikroorganismen und Erdölprodukten. Außerdem kann die Anlage bei Notwendigkeit leicht auf ein Betriebsregime umgestellt werden, bei dem anodisches und katodisches Wasser erzeugt wird, das auf Organismen bestimmte physiologische Effekte ausübt.

Wie aus den beschriebenen Beispielen und **Fig. 2, und 3** hervorgeht, sind das vorgeschlagene Verfahren und die erfindungsgemäße Vorrichtung in ihren beschriebenen Ausführungsformen einfach handhabbar und universell anwendbar. Sie sind für das Abtrennen von Komponenten verschiedener Art aus Wasser und anderen flüssigen Medien geeignet. Sie können unter anderem angewendet werden für die Reinigung von Wasser auf Schiffen, die Trinkwasseraufbereitung, für die Reinigung von gewerblichen und kommunalen Abwässern, die Grundwasserreinigung, in der Biotechnologie sowie die Spaltung von Öl-in-Wasser Emulsionen.

Bezugszeichenaufstellung

| 1 | Behälter |
|---|---|
| 2 | n.b. |
| 3 | n.b. |
| 4 | n.b. |
| 5 | n.b. |
| 6 | n.b. |
| 7 | n.b. |
| 8 | Stromquelle |
| 9 | n.b. |
| 10 | n.b. |
| 11 | n.b. |
| 12 | semipermeable Wand |
| 13 | Elektrodenkammer |
| 14 | Elektrodenkammer |
| 15 | Arbeitskammer |
| 16 | Füllkörper |
| 17 | Elektrode |
| 18 | Elektrode |
| 19 | Stutzen |
| 20 | Stutzen |
| 21 | Stutzen |

| | |
|---|---|
| 22 | Stutzen |
| 23 | Stützkörper |
| 24 | Gehäuse |
| 25 | Gitter |
| 26 | n.b. |
| 27 | n.b. |
| 28 | Elektroadsorptionssäule |
| 29 | Behälter |
| 30 | Elektrodenzelle (elektrochemische Eingangszelle) |
| 33 | Elektroden |
| 34 | oberer Teil des Behälters |
| 35 | Rohrleitung |
| 36 | Rohrleitung |
| 37 | Rohrleitung |
| 38 | Rohrleitung |
| 39 | Ventil |
| 40 | Vorlage |
| 41 | Ventil |
| 42 | Behälter |
| 43 | Elektroden |
| 44 | Elektroden |
| 45 | Ventil |
| 46 | Behälter |
| 47 | Behälter |
| 48 | Ventil |

**Patentansprüche**

1. Verfahren zum Abtrennen von Komponenten, insbesondere molekulare, ionogen und/oder kolloid gelöste Spezies und/oder Mikroorganismen, aus flüssigen homogenen oder heterogenen Systemen, bei dem das flüssige System durch einen mit Füllkörpern versehenen Behälter gefördert wird, an den ein elektrisches Feld zum Polarisieren der Füllkörper gelegt ist und die Füllkörper zum Abtrennen der Komponenten nachfolgend unter Verwendung eines flüssigen Mediums regeneriert werden, dadurch gekennzeichnet, daß, die Polarisierung und Ausbildung der Adsorbtionseigenschaften der eingesetzten, in Lösung polarisierbaren, ohne elektrisches Feld nichtadsorbierenden und elektrisch nichtleitenden Füllkörper, die den Behälter zu maximal 95 % füllen, in einer Anfangsphase mit einer Feldstärke erfolgt, die den normalen Betriebswert um ein Mehrfaches übersteigt und der Restraum als Reservoir zum Regenerieren der Füllkörper, die ohne elektrisches Feld nichtadsorbierend sind, bei einer entgegengesetzt zur Durchströmrichtung des zu reinigenden flüssigen Systems dient.

2. Verfahren nach Anspruch 1, dadurch gekennzeichnet, daß das flüssige System beim Abtrennen von Komponenten mehrere Schichten von Füllkörpern unterschiedlicher Teilchengröße und Schichtdicken durchläuft.

3. Verfahren nach Anspruch 1, dadurch gekennzeichnet, daß am Zulauf das flüssigen Systems in den Behälter durch Anodenlösung Ionen erzeugt werden, die als Koagulanten wirksam werden.

4. Verfahren nach Anspruch 1, dadurch gekennzeichnet, daß die polarisierbaren, ohne elektrisches Feld nichtadsorbierenden Füllkörper bestehen aus einer ferroelektrischen Keramik, die mit einer Polymerschicht umhüllt oder in einer Polymermatrix, vorzugsweise gemischt mit Silikaten, eingebettet oder als Pulver in kugeligen Körnern aus vernetztem Polyvinylalkohol in einem Masseverhältnis bis 1 : 12 eingeschlossen ist, oder aus einem nichtleitenden dispersen Material, vorzugsweise Sand, zerkleinertem Quarz und/oder einer Dispersion von Chitosan, Zellulose und Verbundstoff, wobei die Füllkörper einen Korndurchmesser im Bereich von 0,1 mm bis 3,0 mm aufweisen.

5. Verfahren nach Anspruch 4, dadurch gekennzeichnet, daß die ferroelektrische Keramik $Nb_2O_5$ und oder $BaTiO_2$ enthält.

6. Verfahren nach einem der Ansprüche 1 bis 5, dadurch gekennzeichnet, daß das flüssige System mit einer reziproken Verweildauer von 0,1 h$^{-1}$ bis 50 h$^{-1}$ durch den Behälter gefördert wird, wobei die Füllkörper gleichmäßig den Zwischenelektrodenraum ausfüllen und das elektrische Feld eine Feldstärke von nicht weniger als 1 V/cm aufweist.

7. Verfahren nach einem der Ansprüche 1 bis 6, dadurch gekennzeichnet, daß für die Regenerierung der Füllkörper Wasser oder eine Salzlösung mit einer Konzentration von 1 bis 4 Masse-% oder an sich übliche Detergentien, Säuren, Laugen und organische Lösungsmittel verwendet werden.

8. Vorrichtung zur Durchführung des Verfahrens nach Anspruch 1, bestehend aus einem quaderförmigen Behälter (1) mit Stutzen (19 - 22) für den Zu- und Ablauf des zu reinigenden flüssigen Systems und des flüssigen Mediums zum Regenerieren, einer Stromquelle (8), die Elektroden (17, 18) zum Aufbau eines elektrischen Feldes speist und polarisierbaren Füllkörpern (16), die beim Abtrennen und Regenerieren umspült werden, dadurch gekennzeichnet, daß der Behälter (1) ein 3-Kammersystem enthält, bestehend aus Elektrodenkammern (13) und (14)

mit den Elektroden (17, 18) sowie dazwischen angeordneter Arbeitskammer (15) mit gitterförmigen Wänden, in der die in Lösung polarisierbaren, ohne elektrisches Feld nichtabsorbierenden und elektrisch nichtleitenden Füllkörper (16) angeordnet sind, wobei die Elektrodenkammern (13) und (14) Elektrolytlösungen enthalten, die zweckentsprechende Puffereigenschaften haben, und die Elektrodenkammern (13) und (14) zusätzlich mittels semipermeabler Wände (12) von der Arbeitskammer (15) getrennt sind.

**9.** Vorrichtung nach Anspruch 8, dadurch gekennzeichnet, daß
die gitterförmigen Wände aus einem Stützkörper (23) mit Gitter (25) oder Drahtnetz bestehen oder im elektrischen Feld polarisierbare oder nichtpolarisierbare Diaphragmen sind.

**10.** Vorrichtung nach Anspruch 8, dadurch gekennzeichnet, daß
die semipermeable Wand (12) für Elektrolyseprodukte der Elektrokammern (13, 14) sowie für große Moleküle und Kolloidteilchen aus der Arbeitskammer (15) undurchlässig ist und einen elektrischen Gesamtwiderstand aufweist, der mindestens das 2-fache des Widerstandes der Füllkörperschicht beträgt.

**11.** Vorrichtung nach einem der Ansprüche 8 bis 10, dadurch gekennzeichnet, daß
die Elektrodenkammern (13, 14) mit einer an sich bekannten Vorrichtung zur Zirkulation des in den Elektrodenkammern (13, 14) befindlichen Elektrolyten verbunden sind.

**12.** Vorrichtung zur Durchführung des Verfahrens nach Anspruch 1 und 3, bestehend aus einem säulenförmigen Behälter (29) mit Anschlüssen für den Zu- und Ablauf des zu reinigenden flüssigen Systems und des flüssigen Mediums zum Regenerieren, einer Stromquelle, die Elektroden (33, 43, 44) speist und polarisierbaren Füllkörpern (32), die beim Abtrennen und Regenerieren umspült werden, dadurch gekennzeichnet, daß
der Behälter (29) unten zusätzlich eine Elektrodenzelle (30) und oben eine Elektrodenzelle (31) aufweist, die mit Anoden ausgestattet sind, die sich flächenmäßig deutlich von den Katoden unterscheiden, die in Lösung polarisierbaren, ohne elektrisches Feld nichtabsorbierenden und elektrisch nichtleitenden Füllkörper (32) schichtweise im Behälter (29) angeordnet sind, sowie der Behälter (29) im oberen Bereich einen Restraum (34) für die Spülung der Füllkörper (32) enthält.

**13.** Vorrichtung nach Anspruch 12, dadurch gekennzeichnet, daß
die Elektrodenzellen (30, 31) mit Gasfallen ausgestattet sind und die Elektrodenzelle (30) außerhalb des Behälters (29) angeordnet ist.

**14.** Vorrichtung nach Anspruch 12, dadurch gekennzeichnet, daß
der Behälter (29), der beim Abtrennen von unten nach oben durchströmt wird, im unteren Bereich einen weiteren, separat zu öffnenden Abfluß aufweist, wobei die Durchlaßfähigkeit dieser Rohrleitung (37) die Durchlaßfähigkeit der Rohrleitung (35) das Zulaufes für das zu reinigende flüssig System mindestens um das 1,5-fache übertrifft.

**Claims**

**1.** Process for separating components, in particular molecular, ionogenously and/or colloidally dissolved species and/or microorganisms, from liquid homogeneous or heterogeneous systems, in which process the liquid system is conveyed through a container which is provided with fillers and to which an electrical field for polarising the said fillers is applied, and the fillers for separating the components are subsequently regenerated using a liquid medium,
characterised in that
the polarisation and development of the adsorption properties of the fillers used, which are polarisable in solution, are non-adsorbent without an electrical field and electrically non-conductive, and fill the container to a maximum of 95%, takes place in an initial phase with a field strength which exceeds the normal operating value by a multiple, and the residual space serves as a reservoir for regenerating the fillers, which are non-adsorbent without an electrical field, when flushing occurs contrary to the direction of through-flow of the liquid system to be cleaned.

**2.** Process according to claim 1, characterised in that, during the separation of components, the liquid system runs through a number of layers of fillers of differing particle size and layer thicknesses.

**3.** Process according to claim 1, characterised in that, at the infeed of the liquid system into the container, ions which become operative as coagulants are produced by anode-dissolution.

**4.** Process according to claim 1, characterised in that the polarisable fillers, which are non-adsorbent without an electrical field, consist of a ferroelectrical ceramic which is coated with a polymer layer or embedded in a polymer matrix, preferably mixed with silicates, or included as a powder in spherical grains of cross-linked polyvinyl alcohol in a mass ratio of up to 1 : 12, or else consist of a non-conduc-

tive disperse material, preferably sand, comminuted quartz and/or a dispersion of chitosan, cellulose and composite, the fillers having a grain diameter in the range from 0.1 mm to 3.0 mm.

5. Process according to claim 4, characterised in that the ferroelectric ceramic contains $Nb_2O_5$ and/or $BaTiO_2$.

6. Process according to one of claims 1 to 5, characterised in that
the liquid system is conveyed through the container with a reciprocal dwell duration of 0.1 h$^{-1}$ to 50 h$^{-1}$, the fillers uniformly filling up the intermediate electrode space and the electrical field having a field strength of not less than 1 V/cm.

7. Process according to one of claims 1 to 6, characterised in that
for regenerating the fillers, use is made of water or of a salt solution with a concentration of 1 to 4 % by mass or of detergents, acids, lyes and organic solvents which are, *per se*, conventional.

8. Device for performing the method according to claim 1, the said device consisting of a parallelepipedal container (1) with connecting pieces (19 - 22) for feeding-in and discharging the liquid system to be cleaned and the liquid medium for regeneration purposes, of a current source (8) which feeds electrodes (17, 18) for building up an electrical field, and of polarisable fillers (16) around which flushing occurs during separation and regeneration, characterised in that
the container (1) contains a 3-chamber system consisting of electrode chambers (13) and (14) with the electrodes (17, 18) and also of a working chamber (15) with latticed walls which is disposed between the said electrode chambers and in which the fillers (16), which are polarisable in solution, are non-absorbent without an electrical field and are electrically non-conductive, are disposed, the electrode chambers (13) and (14) containing electrolyte solutions which have appropriate buffer properties and the said electrode chambers (13) and (14) being additionally separated from the working chamber (15) by means of semipermeable walls (12).

9. Device according to claim 8, characterised in that the latticed walls consist of a supporting body (23) with a lattice (25) or a wire net, or are diaphragms which are polarisable or non-polarisable in the electrical field.

10. Device according to claim 8, characterised in that the semipermeable wall (12) is impermeable to electrolytic products of the electrode chambers (13, 14) and also to large molecules and colloid particles from the working chamber (15) and has an overall electrical resistance which amounts to at least twice the resistance of the layer of fillers.

11. Device according to one of claims 8 to 10, characterised in that
the electrode chambers (13, 14) are connected to a device, which is known *per se*, for circulating the electrolytes located in the electrode chambers (13, 14).

12. Device for performing the method according to claims 1 and 3, the said device consisting of a column-shaped container (29) with connections for feeding-in and discharging the liquid system to be cleaned and the liquid medium for regeneration purposes, of a current source which feeds electrodes (33, 43, 44) and of polarisable fillers (32) around which flushing occurs during separation and regeneration, characterised in that
the container (29) has, additionally at the bottom, an electrode cell (30) and, at the top, an electrode cell (31), which electrode cells are equipped with anodes which differ distinctly from the cathodes in terms of area, the fillers (32), which are polarisable in solution, are non-absorbent without an electrical field and are electrically non-conductive, are disposed in layers in the container (29), and the container (29) contains, in the upper region, a residual space (34) for flushing the fillers (32).

13. Device according to claim 12, characterised in that the electrode cells (30, 31) are equipped with absorption tubes and the electrode cell (30) is disposed outside the container (29).

14. Device according to claim 12, characterised in that the container (29), through which the flow passes from the bottom upwards during separation, has, in the lower region, another outlet which is to be opened separately, the permeability capacity of this pipeline (37) surpassing the permeability of the pipeline (35) of the infeed for the liquid system to be cleaned by at least 1.5 times.

**Revendications**

1. Procédé pour la séparation de composants, en particulier d'espèces moléculaires, dissoutes sous forme ionogène et/ou colloïdale et/ou de microorganismes, à partir de systèmes liquides homogènes ou hétérogènes, dans lequel le système liquide est acheminé à travers un récipient muni de masses de garnissage, sur lequel est appliqué un champ électrique pour la polarisation des masses de garnissage et les masses de garnissage sont ensuite régénérées pour séparer les composants, avec utilisation d'un milieu liquide,

caractérisé par le fait que

la polarisation et l'établissement des propriétés d'adsorption des masses de remplissage introduites, non adsorbantes et non-conductrices de l'électricité en l'absence d'un champ électrique, qui remplissent le récipient jusqu'à un maximum de 95%, sont réalisées dans une phase initiale avec une intensité du champ qui dépasse d'un multiple la valeur de fonctionnement normal et l'espace restant sert de réservoir pour la régénération des masses de garnissage, qui sont non adsorbantes en l'absence de champ électrique, dans une direction opposée à la direction d'écoulement du système liquide à purifier.

2. Procédé selon la revendication 1, caractérisé par le fait que le système liquide traverse, lors de la séparation des composants, plusieurs couches de masses de garnissage ayant des tailles de particule différentes et des épaisseurs de couche différentes.

3. Procédé selon la revendication 1, caractérisé par le fait que, lors de l'introduction du système liquide dans le récipient, on produit par dissolution d'anode des ions qui sont actifs en tant que coagulants.

4. Procédé selon la revendication 1, caractérisé par le fait que les masses de garnissage polarisables, non adsorbantes en l'absence de champ électrique, consistent en une céramique ferroélectrique, qui est enrobée avec une couche de polymère ou noyée dans une matrice de polymère, de préférence en mélange avec des silicates, ou est incorporée sous forme de poudre dans des grains sphériques en poly(alcool vinylique) réticulé dans une proportion en masse de 1:12, ou en un matériau dispersé non-conducteur, de préférence du sable, du quartz broyé et/ou une dispersion de chitosan, de cellulose et de liant, tandis que les charges présentent un diamètre de grain dans l'intervalle de 0,1 mm à 3,0 mm.

5. Procédé selon la revendication 4, caractérisé par le fait que la céramique ferroélectrique contient du $Nb_2O_5$ et/ou du $BaTiO_2$.

6. Procédé selon l'une des revendications 1 à 5, caractérisé par le fait que le système liquide est acheminé à travers le récipient avec un inverse de durée de séjour de 0,1 h$^{-1}$ à 50 h$^{-1}$, tandis que les masses de garnissage remplissent de façon régulière l'espace interélectrodes et le champ électrique présente une intensité de champ qui n'est pas inférieure à 1 V/cm.

7. Procédé selon l'une des revendications 1 à 6, caractérisé par le fait que pour la régénération des masses de garnissage, on emploie de l'eau ou une solution saline ayant une concentration de 1 à 4% en masse ou des détergents, des acides, des lessives et des solvants organiques classiques en soi.

8. Appareillage pour la mise en oeuvre du procédé selon la revendication 1, consistant en un récipient parallélépipédique (1) comportant des colonnes (19-22) pour l'entrée et la sortie du système liquide à purifier et du milieu liquide à régénérer, une source de courant (8) qui alimente les électrodes (17, 18) pour établir un champ électrique et des masses de garnissage polarisables (16), qui sont balayées pour la séparation et la régénération, caractérisé par le fait que le récipient (1) comprend un système à 3 chambres, consistant en des chambres d'électrodes (13) et (14) avec les électrodes (17, 18), ainsi que des chambres de travail (15) disposées entre elles, présentant des parois en forme de grille dans lesquelles sont placées les masses de garnissage (16) polarisables en solution, non absorbantes en l'absence de champ électrique et non-conductrices de l'électricité, tandis que les chambres d'électrodes (13) et (14) contiennent des solutions d'électrolyte qui ont des propriétés de tampon correspondant à l'objectif, et les chambres d'électrodes (13) et (14) sont, en outre, séparées au moyen de parois semi-perméables (12) de la chambre de travail (15).

9. Installation selon la revendication 8, caractérisée par le fait que les parois en forme de grille comprennent un corps d'appui (23) avec des grilles (25) ou un réseau de fils ou sont des diaphragmes polarisables ou non-polarisables dans un champ électrique.

10. Appareillage selon la revendication 8, caractérisé par le fait que la paroi semi-perméable (12) est étanche pour les produits d'électrolyse des chambres d'électrodes (13, 14), ainsi que pour les grosses molécules et les particules colloïdales provenant de la chambre de travail (15), et présente une résistante électrique totale qui s'élève à au moins trois fois la résistance électrique de la couche de masses de garnissage.

11. Appareillage selon l'une des revendications 8 à 10, caractérisé par le fait que les chambres d'électrodes (13, 14) sont reliées à un dispositif connu en soi pour la circulation de l'électrolyte se trouvant dans les chambres d'électrodes (13, 14).

12. Appareillage pour la mise en oeuvre du procédé selon la revendication 1 et 3, consistant en un récipient en forme de colonne (29) ayant des raccords pour l'entrée et le sortie du système liquide à purifier et du milieu liquide à régénérer, une source de courant, qui alimente des électrodes (33, 43, 44) et des masses de garnissage polarisables (32), qui sont balayées lors de la séparation et de la régénération, caractérisé par le fait que le récipient (29) présente à sa partie inférieure également une cellule d'électrodes (30) et à sa partie supérieure une cellule d'électrodes (31), qui sont équipées d'anodes qui se distinguent nettement par leur aire de surface des cathodes, les masses de garnissage (32) polarisables en solution, non absorbantes en l'absence de champ électrique et non-conductrices de l'électricité sont disposées en couches dans le récipient (29), tandis que le récipient (29) comporte dans sa partie supérieure un espace restant (34) pour le balayage des masses de garnissage (32).

13. Appareillage selon la revendication 12, caractérisé par le fait que les cellules d'électrodes (30, 31) sont munies de tubes absorbants et la cellule d'électrodes (30) est placée à l'extérieur du récipient (29).

14. Appareillage selon la revendication 12, caractérisé par le fait que le récipient (29), qui est parcouru de bas en haut lors de la séparation, présente dans sa partie inférieure une autre sortie, à ouvrir séparément, tandis que la capacité de passage de la conduite tubulaire (35) dépasse d'au moins 1,5 fois l'arrivée pour le système liquide à purifier.

Fig. 1

Fig. 2

Fig. 3